# EUROPÄISCHE PATENTSCHRIFT

(11) **EP 2 274 150 B1**
(45) Veröffentlichungstag und Bekanntmachung des Hinweises auf die Patenterteilung: **06.05.2015**
(21) Anmeldenummer: 09741726.5
(22) Anmeldetag: 31.03.2009
(51) Int. Cl.: B29C 49/42

(54) **VORRICHTUNG ZUM HALTEN VON VORFORMLINGEN**
DEVICE FOR BLOW-MOULDING CONTAINERS
SYSTÈME DE MOULAGE PAR SOUFFLAGE DE CONTENANTS

(30) Priorität: 09.05.2008 DE 102008023701
(43) Veröffentlichungstag der Anmeldung: 19.01.2011
(73) Patentinhaber: KHS Corpoplast GmbH, 22145 Hamburg (DE)
(72) Erfinder: LINKE, Michael, 22047 Hamburg (DE); LITZENBERG, Michael, 21502 Geesthacht (DE); BAUMGARTE, Rolf, 22926 Ahrensburg (DE); LEWIN, Frank, 22889 Tangstedt (DE); GRUNWALD, Matthias, 44328 Dortmund (DE)
(74) Vertreter: Hausfeld, Norbert
(86) Internationale Anmeldenummer: PCT/DE2009/000475
(87) Internationale Veröffentlichungsnummer: WO 2009/135453

(56) Entgegenhaltungen:
- EP-A- 1 880 825
- WO-A-02/38353
- WO-A1-2006/097056
- DE-B- 1 102 639
- US-A- 4 082 175
- US-A- 6 106 273
- DATABASE WPI Week 200548 Thomson Scientific, London, GB; AN 2005-471785 XP002544521 -& JP 2005 161576 A (FACTOR TWO KK) 23. Juni 2005 (2005-06-23)

## Beschreibung

Die Erfindung betrifft eine Vorrichtung zur Blasformung von Behältern, die eine Heizstrecke zur Erwärmung von Vorformlinge aus einem thermoplastischen Material aufweist und die mit einer Blaseinrichtung versehen ist, die mindestens eine Blasstation zur Umformung der vorformlinge in die Behälter aufweist, sowie bei der ein Tragelement zum Transport der vorformlinge im Bereich eines in einen Mündungsabschnitt des Vorformlings einführbaren Kopfes mindestens ein positionierbares Klemmelement aufweist, und bei der das Klemmelement gerundet ausgebildet ist und entlang eines Außenumfanges des Kopfes mindestens zwei Klemmelemente relativ zueinander mit einem Abstand angeordnet sind.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die vorformlinge sowie die geblasenen Behälter mit Hilfe unterschiedlicher Handhabungseinrichtungen transportiert werden. Bekannt ist die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Klemmdornen, die zur Halterung in einen Mündungsbereich des Vorformlings einführbar sind, gehören ebenfalls zu den verfügbaren Konstruktionen.

Eine Handhabung von Behältern und Vorformlingen unter Verwendung von Übergaberädern wird beispielsweise in der DE-OS 199 06 438 bei einer Anordnung eines Übergaberades zwischen einem Blasrad und einer Ausgabestrecke und eines weiteren Übergaberades zwischen der Heizstrecke und dem Blasrad beschrieben.

Die bereits erläuterte Handhabung der Vorformlinge erfolgt zum einen bei den sogenannten Zweistufenverfahren, bei denen die vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Ein-stufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die für einen Transport der Vorformlinge verwendeten Transport-dorne können noch nicht allen Anforderungen gerecht werden, die an einen sicheren Transport der Vorformlinge mit hoher Transportgeschwindigkeit gestellt werden. Insbesondere die Transportdorne, die in einen Mündungsbereich der Vorformlinge eingeführt werden, besitzen noch eine Reihe von Mängel. Die bekannten Klemmdorne sind in der Regel aus einem harten Kern ausgebildet, auf den außenseitig ein O-Ring aus einem Elastomer aufgesteckt ist. Bei einem Einführen des Klemmdornes in den Mündungsbereich des Vorformlings hinein wird der O-Ring elastisch verformt und führt zu einer Fixierung des Vorformlings am Klemmdorn.

Eine derartige Halterung der Vorformlinge erweist sich bei zunehmender Betriebsdauer als unzuverlässig. Zum einen unterliegen die Innendurchmesser der Vorformlinge Fertigungstoleranzen, die zu unterschiedlichen Klemmkräften führen. Darüber hinaus verändert sich die Elastizität und somit die erzeugte federnde Kraft des elastomeren Materials mit zunehmender Alterung sowie in Abhängigkeit von der jeweils herrschenden Temperatur. Es ist auch nicht möglich, vorsorglich eine zu große Spannung auf den Mündungsbereich aufzubringen, da eine derartig große Spannung zu Verformungen des Mündungsbereiches führen würde. Aufgrund dieser Eigenschaften der elastomeren Materialien ist damit zu rechnen, daß eine mehr oder weniger große Anzahl von vorformlingen von den Klemmdornen herunterfällt und nicht für eine nachfolgende Blasverformung zur Verfügung steht.

In der DE 10 2005 011 805 wird bereits ein steuerbares Klemmelement beschrieben, das aus einem elastomeren Material besteht und als federartiges Hohlprofil ausgebildet ist. Gegenüber der Verwendung von vollprofilen, beispielsweise in der Form von O-Ringen, konnten hiermit zwar bereits wesentliche verbesserungen erreicht werden, die Anforderungen an eine über einen langen Betriebszeitraum gleichmäßige und reproduzierbare Entfaltung von Klemmkräften konnten aber trotzdem noch nicht in zufriedenstellender Art und Weise erfüllt werden.

Aus der EP 1 880 825 A ist es bereits bekannt, ein Tragelement für Vorformlinge mit kugelartigen Klemmelementen auszustatten. Die Klemmelemente werden von elastischen Gegenelementen gehaltert und können bei einem Einführen in den Mündungsabschnitt des Vorformlings in Ausnehmungen eines Gehäuses zurückgedrückt werden.

In der US 6,106,273 A wird ein Tragelement für Vorformlinge beschrieben, bei dem hebelartige Klemmelemente verschwenkbar angeordnet sind. Die hebelartigen Klemmelemente werden durch eine Verstellung eines Positionierelementes in einer Längsrichtung des Vorformlings positioniert.

Aus der WO 02/38353 A ist es bekannt, hebelartige Klemmelemente relativ zu einer Andruckfeder zu verstellen. US 4 082 175 zeigt eine Vorrichtung nach dem Obergriff des Anspruchs 1. DE 1 102 639 zeigt eine Vorrichtung mit starren Spannelementen.

Aufgabe der vorliegenden Erfindung ist es, eine Vorrichtung der einleitend genannten Art derart zu konstruieren, daß ein zuverlässiger Transport der Vorformlinge bei hoher Transportgeschwindigkeit unterstützt wird.

Diese Aufgabe wird erfindungsgemäß mit einer Vorrichtung nach Anspruch 1 gëlost.

Durch das lose Hineinführen des Tragelementes in den Mündungsabschnitt des Vorformlings werden Reibeffekte während des Einführens, die zu einem Materialabrieb führen können, vermieden. Nach einem Erreichen der Endpositionierung des Tragelementes innerhalb des Mündungsabschnittes erfolgt ein aktives verspannen und somit eine sichere Halterung des Vorformlings. Nach einer vorgesehenen Positionierung des Vorformlings wird die verspannung zwischen dem Tragelement und dem Mündungsabschnitt wieder aufgehoben und das Tragelement kann ohne Reibkontakt mit dem Vorformling aus dem Mündungsabschnitt herausgezogen werden.

Die gerundete Ausbildung der Klemmelemente und die Verwendung von mehreren separaten Klemmelementen ermöglicht eine definierte radiale Positionierung der Klemmelemente, ohne daß eine elastische Verformung erforderlich ist. Die Klemmelemente können exakt in einer radialen Richtung zur Durchführung des Klemmvorganges positioniert werden. Durch die gerundete Kontur wird ein einfaches Abgleiten an zugeordneten Leitflächen unterstützt. Darüber hinaus können die Klemmkräfte lokal begrenzt in den Bereich einer Innenbegrenzung des Mündungsabschnittes des Vorformlings eingebracht werden.

Ein Transport der Vorformlinge ohne Durchführung von Wendevorgängen wird dadurch unterstützt, daß die Vorformlinge mindestens entlang eines Teiles ihres Transportweges vom Tragelement mit ihren Mündungsabschnitten in lotrechter Richtung nach oben orientiert transportiert werden.

Gemäß einer Ausführungsvariante ist vorgesehen, daß die Verspannung zwischen dem Tragelement und dem Vorformling durch eine am Tragelement angreifende Zugkraft vorgegeben wird.

Ebenfalls ist daran gedacht, daß die Verspannung zwischen dem Tragelement und dem Vorformling durch eine am Tragelement angreifende Druckkraft vorgegeben wird.

Eine zuverlässige Halterung der Vorformlinge kann dadurch erfolgen, daß das Tragelement den Vorformling in einem Grundzustand haltert und nur durch eine aktive Stellkraft eine Freigabe des Vorformlings hervorgerufen wird.

Gemäß einer weiteren Ausführungsvariante ist es auch möglich, daß eine Fixierung des Vorformlings vom Tragelement durch eine aktive Stellkraft hervorgerufen wird.

Eine hohe Reproduktionsgenauigkeit wird dadurch unterstützt, daß eine Halterung und Freigabe des Vorformlings über eine das Tragelement beaufschlagende Kurvensteuerung vorgegeben wird.

Eine typische Anwendung besteht darin, daß die Vorformlinge vom Tragelement mindestens entlang eines Teiles einer Heizstrecke transportiert werden.

Geringe mechanische Belastungen bei gleichzeitig hoher Zuverlässigkeit können dadurch erreicht werden, daß vom Tragelement eine in einer Längsrichtung des Tragelementes wirkende Stellkraft in eine im Vergleich zur Stellkraft größere und die Vorformlinge halternde Querkraft transformiert wird.

Eine kompakte und robuste Ausführungsform wird dadurch bereitgestellt, daß das Tragelement ein hülsenförmiges Basiselement und ein im Basiselement geführtes und den Kopf tragendes Positionierelement aufweist.

Eine definierte Kraftübertragung wird dadurch unterstützt, daß das Spannelement starr ausgebildet ist.

Eine sichere Handhabung des Vorformlings wird dadurch erreicht, daß entlang eines Umfanges des Kopfes mindestens drei Spannelemente angeordnet sind.

Zur Transformation einer Hubbewegung in eine radiale Positionierbewegung wird vorgeschlagen, daß das Spannelement in einer radialen Richtung des Kopfes von mindestens einer schräg zur Horizontalen angeordneten Führungsfläche positionierbar ist.

Ein definierter Bewegungsablauf bei der radialen Verschiebung des Klemmelementes wird dadurch unterstützt, daß einander gegenüberliegend und mindestens bereichsweise beabstandet zwei Führungselemente schräg zur Horizontalen angeordnet sind.

Insbesondere wird eine gleichmäßige Bewegungsdurchführung dadurch erreicht, daß sich die beiden Führungsflächen in einer radialen Richtung des Kopfes nach außen V-förmig aufweiten.

Wechselnde Kraftbeaufschlagungsbereiche im Bereich des Klemmelementes und dadurch eine hohe Lebensdauer können dadurch erreicht werden, daß das Spannelement kugelartig ausgebildet ist.

Gemäß einer weiteren Ausführungsform ist auch vorgesehen, daß das Spannelement walzenartig ausgebildet ist.

Ein Herausfallen der Klemmelemente aus dem Kopf kann dadurch vermieden werden, daß ein Aufnahmeraum für das Klemmelement im Bereich des Kopfes gehäuseartig ausgebildet ist.

Zu einer Sicherung der Klemmelemente trägt es insbesondere bei, daß das Klemmelement im Bereich des Kopfes sowohl von einer in lotrechter Richtung nach unten geneigten Führungsfläche als auch von einer in lotrechter Richtung ansteigenden Begrenzungsfläche geführt ist.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine Seitenansicht eines Vorformlings, in den ein aktiv verspannbares Tragelement eingeführt ist,
- Fig. 6: eine teilweise Darstellung der Anordnung gemäß Fig. 5 mit abgenommenem rohrartigen Basiselement,
- Fig. 7: eine teilweise Darstellung eines Längsschnittes durch einen Vorformling mit eingefügtem Halterungselement in einer unverspannten Positionierung und
- Fig. 8: die Anordnung gemäß Fig. 7 in einer Spannpositionierung mit radial nach außen verschobenen Kugeln.

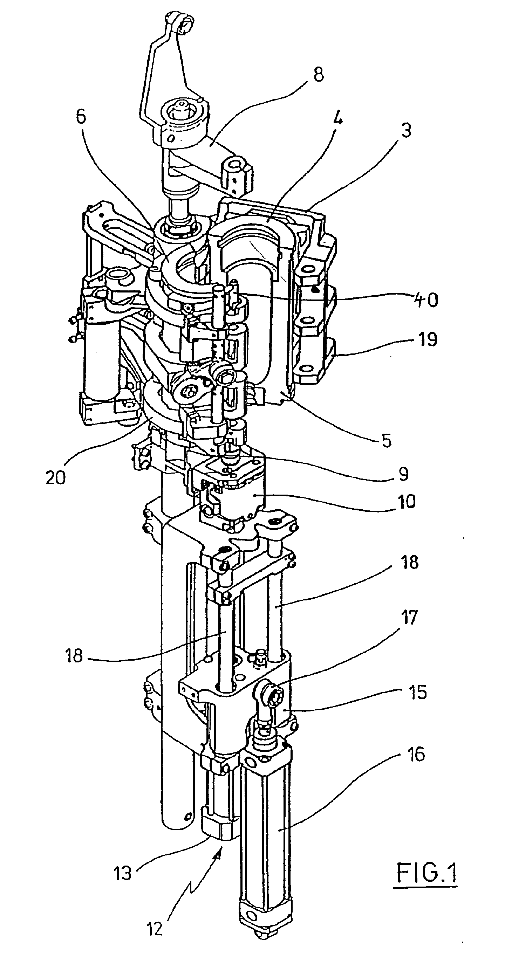

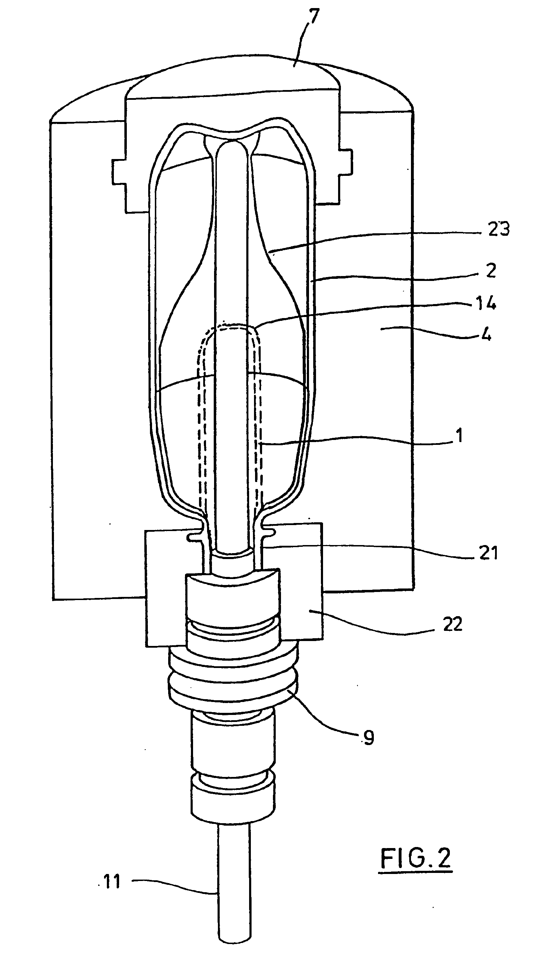

Der prinzipielle Aufbau einer Vorrichtung zur Umformung von Vorformlingen (1) in Behälter (2) ist in Fig. 1 und in Fig. 2 dargestellt. Die Anordnung kann dabei wie dargestellt oder in einer vertikalen Ebene um 180° gedreht erfolgen.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der vorformling (1) kann im Bereich der Blasstation (3) von einem Halteelement (9) fixiert sein. Es ist beispielsweise möglich, den Vorformling (1) über Zangen oder andere Handhabungsmittel direkt in die Blasform (4) einzusetzen.

Zur Ermöglichung einer Druckluftzuleitung ist unterhalb der Blasform (4) ein Anschlußkolben (10) angeordnet, der dem Vorformling (1) Druckluft zuführt und gleichzeitig eine Abdichtung vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad (25) angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

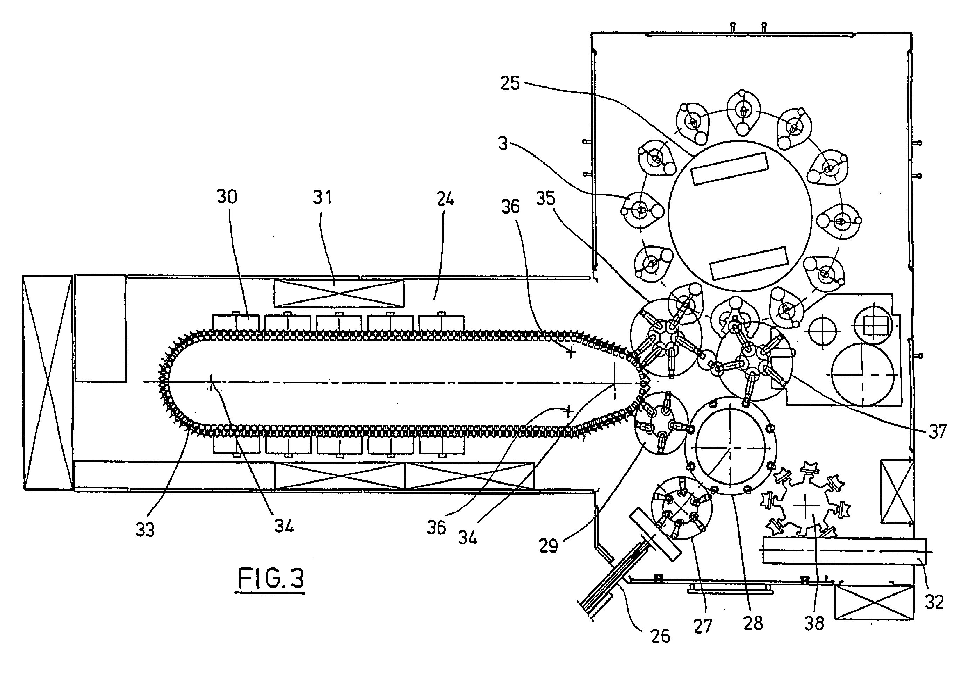

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese von einem Übergaberad (35) an das Blasrad (25) übergeben, in dessen Bereich die Blasstationen (3) angeordnet sind. Die fertig geblasenen Behälter (2) werden von weiteren Übergaberädern (37, 28, 38) einer Ausgabestrecke (32) zugeführt. Das Übergaberad (37) ist dabei als ein Entnahmerad das Übergaberad (39) als ein Ausgaberad ausgebildet.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34, 36) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (27) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (27) und des Blasrades (25) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (27) und zum Blasrad (25). Alternativ zur Verwendung von kettenartigen Transportelementen (33) ist es beispielsweise auch möglich, ein rotierendes Heizrad zu verwenden.

Nach einem fertigen Blasen der Behälter (2) werden diese vom Übergaberad (38) aus dem Bereich der Blasstationen (3) herausgeführt und zur Ausgabestrecke (32) transportiert.

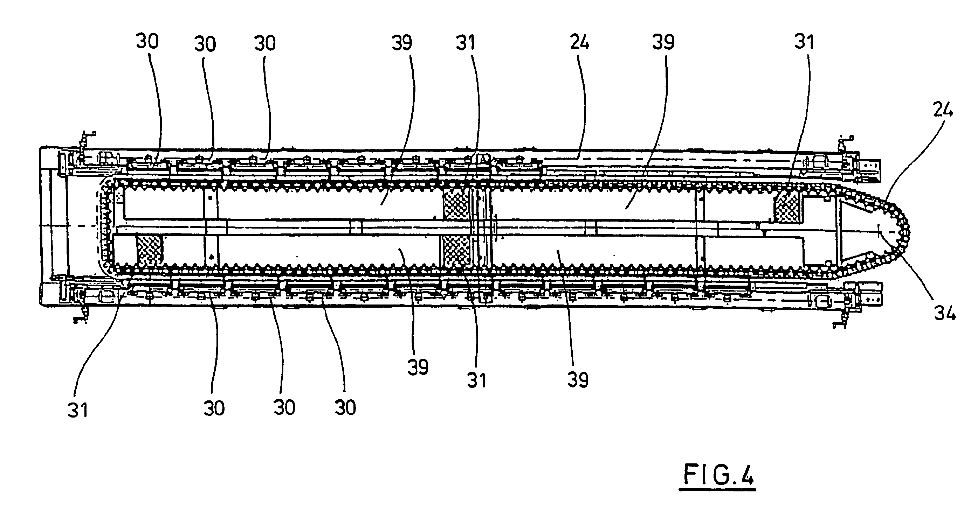

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

Ein Transport der Vorformlinge (1) und der Behälter (2) durch die Blasmaschine kann in unterschiedlicher Art und Weise erfolgen. Gemäß einer Ausführungsvariante werden die Vorformlinge zumindest entlang des wesentlichen Teiles ihres Transportweges von Transportdornen getragen. Es ist aber auch möglich, einen Transport der Vorformlinge unter Verwendung von Zangen durchzuführen, die außenseitig am Vorformling angreifen, oder Innendorne zu verwenden, die in einen Mündungsbereich des Vorformlings eingeführt werden. Ebenfalls sind hinsichtlich der räumlichen Orientierung der Vorformlinge unterschiedliche Varianten denkbar.

Gemäß einer Variante wird der Vorformling im Bereich der Vorformlingseingabe (26) mit seiner Mündung in lotrechter Richtung nach oben orientiert zugeführt, anschließend gedreht, entlang der Heizstrecke (24) und des Blasrades (25) mit seiner Mündung in lotrechter Richtung nach unten orientiert gefördert und vor einem Erreichen der Ausgabestrecke (32) wieder gedreht. Gemäß einer anderen Variante wird der Vorformling (2) im Bereich der Heizstrecke (24) mit seiner Mündung in lotrechter Richtung nach unten orientiert beheizt, vor Erreichen des Blasrades (25) jedoch wieder um 180° gedreht.

Gemäß einer dritten Ausführungsvariante durchläuft der Vorformling den gesamten Bereich der Blasmaschine ohne Durchführung von Wendevorgängen mit seiner Mündung in lotrechter Richtung nach oben orientiert.

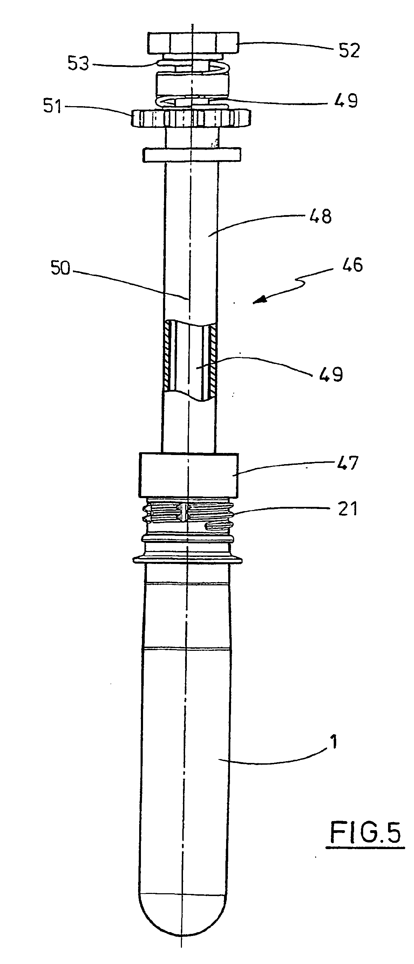

Fig. 5 zeigt eine Seitenansicht eines Vorformlings (1), in dessen Mündungsabschnitt (21) bereichsweise ein Tragelement (46) eingeführt ist. Das Tragelement (46) weist im Bereich seines dem Vorformling (1) zugewandten Endes ein Andruckelement (47) auf, das an einem hülsenförmigen Basiselement (48) befestigt ist. Innerhalb des Basiselementes (48) ist ein Positionierelement (49) geführt, das in Richtung einer Längsachse (50) relativ zum Basiselement (48) beweglich ist. Im Bereich seiner dem Vorformling abgewandten Ausdehnung haltert das Basiselement (48) ein Abschlußelement (51), das beim Ausführungsbeispiel gemäß Fig. 5 als ein Zahnrad ausgebildet ist. Gegenüber dem Abschlußelement (51) stützt sich ein Begrenzungselement (52) des Positionierelementes (49) über eine Feder (53) ab. Die Feder (53) ist als eine Zugfeder ausgebildet und ermöglicht eine Verschiebung des Positionierelementes (49) innerhalb des Basiselementes (48) in Richtung auf den Vorformling (1). Nach einer Beendigung einer ziehenden Kraftbeaufschlagung des Positionierelementes (49) wird dieses von der Feder (53) in eine Grundpositionierung zurückgeführt.

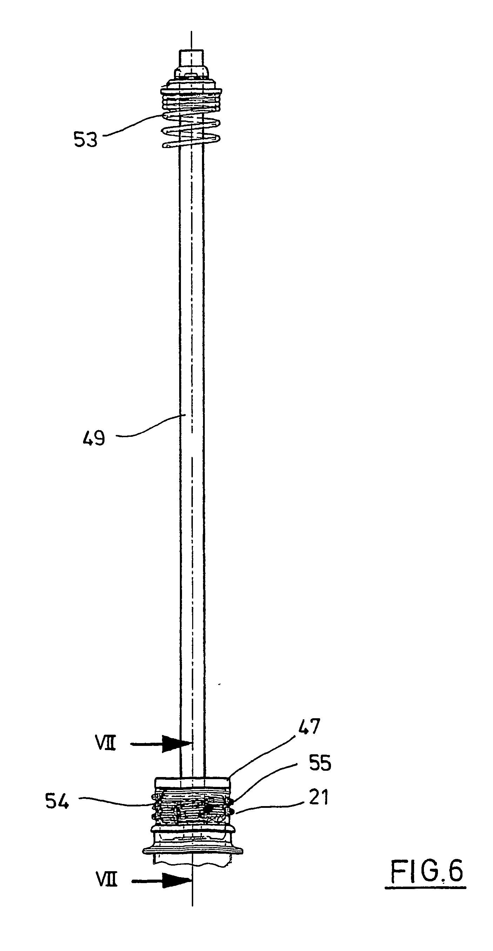

Fig. 6 zeigt eine teilweise Darstellung der Anordnung gemäß Fig. 5 mit abgenommenen Basiselement (48). Es ist zu erkennen, daß der Mündungsabschnitt (21) mit einer oberen Begrenzung (54) gegen das Andrückelement (47) geführt ist. Das Positionierelement (49) greift mit einem Kopf (55) in den Mündungsabschnitt (21) ein.

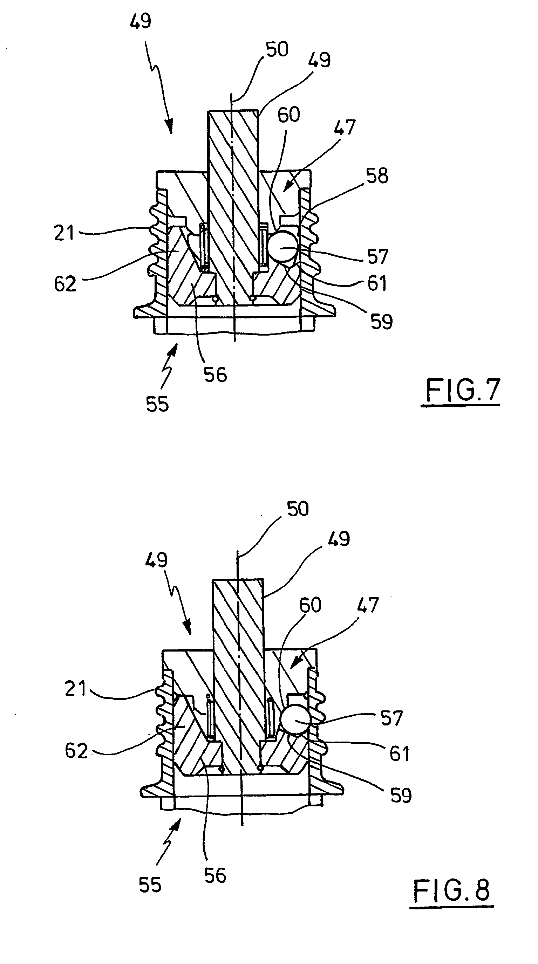

Der Kopf (55) besteht gemäß der Darstellung in Fig. 7 im wesentlichen aus einem Spannelement (56) sowie einem zwischen dem Spannelement (56) und dem Andrückelement (47) angeordneten Klemmelement (57). Das Klemmelement (57) kann als Kugel ausgebildet sein.

Bei der in Fig. 7 dargestellten Einführpositionierung ist die hier nicht dargestellte Feder (53) weitgehend entspannt und zwischen dem Klemmelement (57) und einer inneren Begrenzung des Mündungsabschnittes (21) erstreckt sich ein Spalt (58). Das Positionierelement (49) ist in diesem Zustand reibungsfrei bzw. zumindest reibungsarm in den Mündungsabschnitt (21) einführbar. Zur Durchführung einer Verspannung des Klemmelementes (57) relativ zum Vorformling (1) wird das Positionierelement (49) ein Stück aus dem Basiselement (48) in eine dem Vorformling (1) abgewandte Richtung herausgezogen. Das Klemmelement (57) wird hierdurch zwischen dem Andrückelement (47) und dem Spannelement (56) mit einer radialen Bewegungskomponente verschoben und in Richtung auf die Innenwand des Vorformlings (1) nach außen gedrückt. Hierdurch erfolgt ein Spreizen des Kopfes (55) und eine entsprechende Fixierung des Vorformlings (1).

Fig. 7 veranschaulicht, daß das Klemmelement (47) zwischen einer relativ zur Horizontalen geneigten Führungsfläche (59) des Spannelementes (56) und einer ebenfalls relativ zur Horizontalen geneigten Führungsfläche (60) des Andruckelementes (47) geführt ist. Die Führungsfläche (59) weist hierbei relativ zur Horizontalen ein Gefälle und die Führungsfläche (60) eine Steigung auf. Ausgehend von der Längsachse (50) begrenzen die Führungsflächen (59, 60) somit einen Aufnahmeraum, der bereichsweise mit einer V-förmig versehenen Querschnittfläche versehen ist. In einem der Längsachse (50) abgewandten Bereich der Führungsfläche (59) mündet diese in eine Begrenzungsfläche (61) ein, die relativ zur Horizontalen einen Anstieg aufweist. Die Führungsfläche (59) und die Begrenzungsfläche (61) begrenzen somit einen Aufnahmeraum für das Klemmelement (57), das in diesem Bereich ebenfalls eine V-förmige Querschnittfläche besitzt. Die Begrenzungsfläche (61) verhindert ein Herausfallen der Klemmelemente (57) bei einem Herausziehen des Kopfes (55) aus dem Mündungsabschnitt (21). Zur Unterstützung einer definierten Anordnung einer Mehrzahl von Klemmelementen (57) in einem Umfangsbereich des Kopfes (57) weist das Spannelement (56) Trennstege (62) auf, welche sich jeweils zwischen zwei benachbarten Klemmelementen (57) erstrecken. Beispielsweise ist es möglich, das Spannelement (56) mit sechs Trennstegen (62) zu versehen und hierdurch Aufnahmekammern für sechs Klemmelemente (57) bereitzustellen.

Fig. 8 zeigt die Anordnung gemäß Fig. 7 nach einer Positionierung des Spannelementes (56) in Richtung auf das Andruckelement (47). Eine maximale Positionierung des Spannelementes (56) in Richtung auf das Andruckelement (47) wird hierbei durch eine Anlage der Trennstege (62) am Andruckelement (57) festgelegt. Durch die Annäherung der Führungsflächen (59, 60) aneinander wurden die Klemmelemente (57) in einer radialen Richtung nach außen positioniert und fixieren hierdurch den Vorformling (1). Gemäß einer bevorzugten Ausführungsform sind die Klemmelemente (57) als Kugeln ausgebildet. Es ist aber ebenfalls denkbar, beispielsweise eine zylinderförmige oder hülsenartige Kontur einzusetzen. Ein bevorzugtes Material für die Klemmelemente (57) ist Keramik. Hierdurch kann ein Wärmeübergang zwischen den Klemmelementen (57) und dem Vorformling (1) reduziert werden. Grundsätzlich sind aber auch andere Materialien verwendbar, beispielsweise Metall.

Die gerundete Kontur des Klemmelementes (57) führt zu einem vergleichsweise geringen Kontaktgebiet zwischen dem Klemmelement (57) und dem Vorformling (1), so daß bei einer vorgegebenen Preßkraft eine hohe Flächenpressung erreicht wird.

Ein Transport des Tragelementes (46) entlang eines Teiles der Blasmaschine, insbesondere entlang der Heizstrecke (24), kann beispielsweise unter Verwendung von Führungsschienen erfolgen, die zwischen dem Abschlußelement (51) und einem Quersteg eingreifen. Unter Verwendung des mit der Verzahnung versehenen Abschlußelementes (51) kann eine Rotationsbewegung des Tragelementes (46) um die Längsachse (50) herum hervorgerufen werden.

Zur Durchführung einer Positionierbewegung des Positionierelementes (49) relativ zum Basiselement (48) kann eine Kurvensteuerung verwendet werden. Die Kurvensteuerung kann dabei beispielsweise das Begrenzungselement (52) entgegen der Kraft der Feder (53) aus dem Basiselement (48) herausziehen, so daß das Tragelement (46) nach einer Freigabe durch die Kurvensteuerung wieder in die in Fig. 7 dargestellte Grundpositionierung zurückkehrt.

Gemäß einer weiteren Ausführungsform ist es auch möglich, die Feder (53) als eine Druckfeder auszubilden, die in einer Grundpositionierung das Klemmelement (57) zwischen dem Spannelement (56) und dem Andrückelement (47) nach außen verschiebt. Es würde somit im Grundzustand eine Halterung des Vorformlings (1) erfolgen und nur bei einer aktiven Betätigung, beispielsweise durch eine Kurvensteuerung, erfolgt eine Freigabe des Vorformlings (1) durch eine Verschiebung des Klemmelementes (57) nach innen. Die konkrete technische Realisierung kann anwendungsabhängig vorgegeben werden. Die Verwendung der Druckfeder besitzt den Vorteil, daß der Vorformling (1) bei einem Wegfall der externen Steuerkraft nicht verloren werden kann.

Als besonders vorteilhaft erweist es sich, daß die Klemmelemente (57) den Mündungsabschnitt (21) von innen her beaufschlagen. Ein äußerer Bereich des Mündungsabschnittes (21) bleibt hierdurch für eine Handhabung, beispielsweise durch Zangen, frei. Darüber hinaus wird eine Beschädigung des empfindlichen Gewindebereiches des Mündungsabschnittes (21) vermieden. Das Gewinde dient zu einem späteren Aufschrauben von Verschlußkappen eines befüllten Behälters (2) und Beschädigungen würden hier zu Undichtigkeiten führen.

## Patentansprüche

1. Vorrichtung zur Blasformung von Behältern (2),
die eine Heizstrecke (24) zur Erwärmung von Vorformlingen (1) aus einem thermoplastischen Material aufweist und
die mit einer Blaseinrichtung versehen ist, die mindestens eine Blasstation (3) zur Umformung der Vorformlinge (1) in die Behälter (2) aufweist,
sowie bei der ein Tragelement (46) zum Transport der Vorformlinge (1) im Bereich eines in einen Mündungsabschnitt des Vorformlings (1) einführbaren Kopfes (55) mindestens ein positionierbares Klemmelement (57) aufweist, und
das Klemmelement (57) zwischen einem Spannelement (56) und einem Andrückelement (47) angeordnet ist, wobei das Klemmelement (57) gerundet ausgebildet ist, und
zur Einbringung einer Steilkraft in das Tragelement (46) mindestens entlang eines Teiles eines vorgesehenen Transportweges eine Kurvensteuerung angeordnet ist, und
wobei das Spannelement (56) in einer radialen Richtung des Kopfes (55) von mindestens einer schräg zur Horizontalen angeordneten Führungsfläche (59, 60) positionierbar ist,
wobei das Tragelement (46) zur Halterung eines mit seinem Mündungsabschnitt (21) in lotrechter Richtung nach oben ausgerichteten Vorformlings (1) ausgebildet ist,
***dadurch gekennzeichnet, dass***
entlang eines Aussenumfanges des Kopfes (55) mindestens zwei Klemmelemente (57) relativ zueinander mit einem Abstand angeordnet sind, und wobei das Spannelement (56) starr ausgebildet ist.

2. Vorrichtung nach Anspruch 1, **dadurch gekennzeichnet dass** das Klemmelement (57) durch eine in Richtung einer Längsachse (50) des Tragelementes (46) wirkende Zugkraft positionierbar ist.

3. Vorrichtung nach Anspruch 1 oder 2, **dadurch gekennzeichnet, dass** das Klemmelement (57) durch eine In Richtung einer Längsachse (50) des Tragelementes (46) wirkende Druckkraft positionierbar ist.

4. Vorrichtung nach einem der Ansprüche 1 bis 3, **dadurch gekennzeichnet, dass** das Tragelement (46) mindestens eine Feder (53) aufweist, die ohne Einwirkung einer Stellkraft das Klemmelement (57) relativ zum Vorformling (1) verspannt.

5. Vorrichtung nach einem der Ansprüche 1 bis 3, **dadurch gekennzeichnet, dass** das Tragelement (46) eine Feder (53) aufweist, die das Klemmelement (57) in einem Grundzustand in einer entspannten Positionierung anordnet.

6. Vorrichtung nach einem der Ansprüche 1 bis 5, **dadurch gekennzeichnet, dass** das Klemmelement (57) aus Keramik ausgebildet ist.

7. Vorrichtung nach einem der Ansprüche 1 bis 6, **dadurch gekennzeichnet, dass** sich eine Transportstrecke des Tragelementes (46) mindestens entlang eines Teiles einer Heizstrecke (24) erstreckt.

8. Vorrichtung nach einem der Ansprüche 1 bis 7, **dadurch gekennzeichnet, dass** das Klemmelement (57) eine Gestaltung zur Transformation einer in Richtung der Längsachse (50) wirkenden Stellkraft in einer relativ zur Stellkraft grössere den Vorformlinge (1) halternde Klemmkraft aufweist.

9. Vorrichtung nach einem der Ansprüche 1 bis 8, **dadurch gekennzeichnet, dass** das Tragelement (46) ein hülsenförmiges Basiselement (48) und ein im Basiselement (48) geführtes und den Kopf (55) tragendes Positionierelement (49) aufweist.

10. Vorrichtung nach einem der Ansprüche 1 bis 9, **dadurch gekennzeichnet, dass** das Klemmelement (57) mindestens bereichsweise als ein Hohlprofil ausgebildet ist.

11. Vorrichtung nach einem der Ansprüche 1 bis 10, **dadurch gekennzeichnet, dass** entlang eines Umfanges des Kopfes (55) mindestens drei Spannelemente (56) angeordnet sind.

12. Vorrichtung nach Anspruch 1 bis 11, **dadurch gekennzeichnet, dass** einander gegenüberliegend und mindestens bereichsweise beabstandet zwei Führungselemente (59, 60) schräg zur Horizontalen angeordnet sind.

13. Vorrichtung nach Anspruch 12, **dadurch gekennzeichnet, dass** sich die beiden Führungsflächen (59, 60) in einer radialen Richtung des Kopfes (55) nach aussen V-förmig aufweiten.

14. Vorrichtung nach einem der Ansprüche 1 bis 13, **dadurch gekennzeichnet, dass** das Spannelement (56) kugelartig ausgebildet ist.

15. Vorrichtung nach einem der Ansprüche 1 bis 13, **dadurch gekennzeichnet, dass** das Spannelement (56) walzenartig ausgebildet ist.

16. Vorrichtung nach einem der Ansprüche 1 bis 15, **dadurch gekennzeichnet, dass** ein Aufnahmeraum für das Klemmelement (57) im Bereich des Kopfes (55) gehäuseartig ausgebildet ist.

17. Vorrichtung nach einem der Ansprüche 1 bis 16, **dadurch gekennzeichnet, dass** das Klemmelement (57) im Bereich des Kopfes sowohl von einer in lotrechter Richtung nach unten geneigten Führungsfläche (59) als auch von einer In lotrechter Richtung ansteigenden Begrenzungsfläche (61) geführt ist.

## Claims

1. Device for blow-moulding containers (2)
that comprises a heating section (24) for heating preforms (1) made of a thermoplastic material and is provided with a blow facility that comprises at least one blow station (3) for conversion of the preforms (1) into the containers (2),
and in which a carrier element (46) for transport of the preforms (1) comprises at least one positionable clamping element (57) in the region of a head (55) that can be inserted into an exit section of the preform (1), and
the clamping element (57) is arranged between a tensioning element (56) and a contact pressure element (47), whereby the clamping element (57) is provided to be rounded, and
a cam control is arranged for introduction of a positioning force into the carrier element (46) along at least a part of an designated transport path, and
whereby the tensioning element (56) can be positioned in a radial direction of the head (55) by at least one guide surface (59, 60) that is arranged obliquely to the horizontal line,
whereby the carrier element (46) is provided for bracketing a preform (1) that is oriented by its exit section (21) in a vertical direction upward,
**characterised in that**
at least two clamping elements (57) are arranged along an external circumference of the head (55) at a distance with respect to each other, and whereby the tensioning element (56) is provided to be rigid.

2. Device according to Claim 1, **characterised in that** the clamping element (57) can be positioned by a tensile force that acts in the direction of a longitudinal axis (50) of the carrier element (46).

3. Device according to Claim 1 or 2, **characterised in that** the clamping element (57) can be positioned by a compressive force that acts in the direction of a longitudinal axis (50) of the carrier element (46).

4. Device according to any one of the Claims 1 to 3, **characterised in that** the carrier element (46) comprises at least one spring (53) that tensions the clamping element (57) with respect to the preform (1) in the absence of a positioning force.

5. Device according to any one of the Claims 1 to 3, **characterised in that** the carrier element (46) comprises a spring (53) that arranges the clamping element (57) in a relaxed positioning in a basic state.

6. Device according to any one of the Claims 1 to 5, **characterised in that** the clamping element (57) is provided to be made of ceramic material.

7. Device according to any one of the Claims 1 to 6, **characterised in that** a transport section of the carrier element (46) extends along at least a part of a heating section (24).

8. Device according to any one of the Claims 1 to 7, **characterised in that** the clamping element (57) is designed for transformation of a positioning force acting in the direction of the longitudinal axis (50) into a clamping force bracketing the preform (1) that is larger than the positioning force.

9. Device according to any one of the Claims 1 to 8, **characterised in that** the carrier element (46) comprises a sleeve-shaped base element (48) and a positioning element (49) that is guided in the base element (48) and bears the head (55).

10. Device according to any one of the Claims 1 to 9, **characterised in that** the clamping element (57), at least regions thereof, is provided as a hollow profile.

11. Device according to any one of the Claims 1 to 10, **characterised in that** at least three tensioning elements (56) are arranged along a circumference of the head (55).

12. Device according to Claims 1 to 11, **characterised in that** two guide elements (59, 60) are arranged obliquely to the horizontal line such as to be opposite from each other and at a distance from each other, at least over regions thereof.

13. Device according to Claim 12, **characterised in that** the two guide surfaces (59, 60) widen towards the outside in a V-shape in a radial direction of the head (55).

14. Device according to any one of the Claims 1 to 13, **characterised in that** the tensioning element (56) is provided to be sphere-like.

15. Device according to any one of the Claims 1 to 13, **characterised in that** the tensioning element (56) is provided to be roller-like.

16. Device according to any one of the Claims 1 to 15, **characterised in that** a receiving space for the clamping element (57) is provided in the region of the head (55) to be like a casing.

17. Device according to any one of the Claims 1 to 16, **characterised in that** the clamping element (57) is guided in the region of the head both by a guide surface (59) that is inclined downward in vertical direction and by a bordering surface (61) that slopes upward in vertical direction.

## Revendications

1. Dispositif de moulage par soufflage de récipients (2) présentant une zone de chauffage (24) pour le réchauffement de préformes (1) en un matériau thermoplastique et équipé d'un dispositif de soufflage présentant au moins une station de soufflage (3) pour la transformation des préformes (1) en récipients (2), et dont un élément porteur (46) assurant le transport des préformes (1) présente, au niveau d'une tête (55) pouvant être introduite dans la section d'embouchure de la préforme (1), au moins un élément de blocage (57) pouvant être positionné, lequel est placé entre un élément de serrage (56) et un élément presseur (47), l'élément de blocage (57) étant de conformation arrondie et une commande à came étant agencée le long d'au moins une partie d'un parcours prévu pour exercer une force d'actionnement sur l'élément porteur (46) et l'élément de serrage (56) pouvant être positionné radialement en direction de la tête (55) par au moins une surface de guidage (59, 60) inclinée par rapport à l'horizontale, l'élément porteur (46) étant conformé de façon à pouvoir maintenir une préforme (1) dont la section d'embouchure (21) est dirigée verticalement vers le haut, **caractérisé en ce qu'**au moins deux éléments de blocage (57) sont agencés le long d'une périphérie de la tête (55) avec un certain espacement entre eux, l'élément de serrage (56) étant de conformation rigide.

2. Dispositif selon la revendication 1, **caractérisé en ce que** l'élément de blocage (57) peut être positionné par une force de traction agissant dans le sens d'un axe longitudinal (50) de l'élément porteur (46).

3. Dispositif selon la revendication 1 ou 2, **caractérisé en ce que** l'élément de blocage (57) peut être positionné par une force de pression agissant dans le sens d'un axe longitudinal (50) de l'élément porteur (46).

4. Dispositif selon l'une des revendications 1 à 3, **caractérisé en ce que** l'élément porteur (46) présente au moins un ressort (53) qui, sans requérir l'action d'une force d'actionnement, presse l'élément de blocage (57) vers la préforme (1).

5. Dispositif selon l'une des revendications 1 à 3, **caractérisé en ce que** l'élément porteur (46) présente un ressort (53) qui place l'élément de blocage (57) en un état initial en position relâchée.

6. Dispositif selon l'une des revendications 1 à 5, **caractérisé en ce que** l'élément de blocage (57) est réalisé en céramique.

7. Dispositif selon l'une des revendications 1 à 6, **caractérisé en ce qu**'un parcours de transport de l'élément porteur (46) s'étend le long d'au moins une partie d'une zone de chauffage (24).

8. Dispositif selon l'une des revendications 1 à 7, **caractérisé en ce que** l'élément de blocage (57) est de conformation propre à transformer une force d'actionnement agissant dans le sens de l'axe longitudinal (50) en une force de serrage maintenant la préforme (1) et supérieure à la force d'actionnement.

9. Dispositif selon l'une des revendications 1 à 8, **caractérisé en ce que** l'élément porteur (46) présente un élément de base (48) en forme de manchon et un élément de positionnement (49) portant la tête (55) et guidé dans l'élément de base (48).

10. Dispositif selon l'une des revendications 1 à 9, **caractérisé en ce que** l'élément de blocage (57) est, en partie au moins, de conformation présentant un profil creux.

11. Dispositif selon l'une des revendications 1 à 10, **caractérisé en ce que** trois éléments de serrage (58) au moins sont agencés le long d'une périphérie de la tête (55).

12. Dispositif selon l'une des revendications 1 à 11, **caractérisé en ce que** deux éléments de guidage (59, 60) opposés et en partie au moins espacés sont agencés selon un plan incliné par rapport à l'horizontale.

13. Dispositif selon la revendication 12, **caractérisé en ce que** les deux surfaces de guidage (59, 60) s'évasent vers l'extérieur forme de V selon une direction radiale par rapport à la tête (55).

14. Dispositif selon l'une des revendications 1 à 13, **caractérisé en ce que** l'élément de serrage (56) est réalisé sous forme de bille.

15. Dispositif selon l'une des revendications 1 à 13, **caractérisé en ce que** l'élément de serrage (56) est réalisé sous forme de cylindre.

16. Dispositif selon l'une des revendications 1 à 15, **caractérisé en ce qu'**un logement pour l'élément de blocage (57) est réservé sous forme de boîtier au niveau de la tête (55).

17. Dispositif selon l'une des revendications 1 à 16, **caractérisé en ce que** l'élément de blocage (57) est, au niveau de la tête, guidé à la fois par une surface de guidage (59) orientée verticalement vers le bas et un plan limite (61) s'étendant verticalement vers le haut.
